# EUROPEAN PATENT APPLICATION

(11) **EP 4 682 313 A1**
(43) Date of publication of application: **21.01.2026**
(21) Application number: 25187492.1
(22) Date of filing: 04.07.2025
(51) Int. Cl.: E02F 3/36, E02F 3/42, E02F 9/00, E02F 9/20, E02F 9/22, F16H 1/32, F16H 37/08, F16H 57/02, F16H 57/025

(54) **CONSTRUCTION MACHINE AND WORKING DEVICE FOR CONSTRUCTION MACHINE**

(30) Priority: 10.07.2024 JP 2024110926; 03.09.2024 JP 2024151700
(71) Applicant: NABTESCO CORPORATION, Chiyoda-ku Tokyo 102-0093 (JP)
(72) Inventor: Hisada, Kazuki, Tokyo, 102-0093 (JP)
(74) Representative: Grünecker Patent- und Rechtsanwälte PartG mbB

(57) **Abstract**

A construction machine (1) includes: a support portion (5); first to third drive units (10, 20, 30) having first to third drive shafts (11, 21, 31) respectively; a boom (7) having a proximal end portion (7A) supported on the support portion via the first drive unit (10); an arm (8) having a proximal end portion (8A) supported on the boom via the second drive unit; and an attachment (9) having a proximal end portion (9A) supported on the arm via the third drive unit. The first drive shaft (11) is fixed to a distal end portion (5A) of the support portion and the proximal end portion of the boom. The second drive shaft (21) is fixed between a distal end portion (7B) of the boom and the proximal end portion of the arm. The third drive shaft is disposed between a distal end portion (8B) of the arm and the proximal end portion of the attachment. The center of the boom is situated within the width of the arm.

## Description

### TECHNICAL FIELD

The present disclosure relates to a construction machine and a working device for the construction machine.

### BACKGROUND

Construction machines such as a hydraulic excavator include a self-propelled undercarriage and a slewable upper structure provided on top of the undercarriage. The slewable upper structure includes a cab for an operator. A proximal end of an operating unit is rotatably coupled to the slewable upper structure. The operating unit includes, for example, a boom whose proximal end is rotatably coupled to the upper structure, an arm whose proximal end is rotatably coupled to a distal end of the boom, and a bucket rotatably coupled to a distal end of the arm.

In many cases, a hydraulic actuator having a linear motion mechanism is provided in coupling portions between the slewable upper structure and the boom, between the boom and the arm, and between the arm and the bucket. The hydraulic actuator includes a cylinder and a piston rod that can extend and retract relative to the cylinder. For example, at the coupling portion between the slewable upper structure and the boom, a proximal end of the cylinder is rotatably attached to one of the slewable upper structure or the boom, and a distal end of the piston rod is rotatably attached to the other of the slewable upper structure or the boom. The hydraulic actuators are also installed in the same manner at the coupling portions between the boom and the arm and between the arm and the bucket. By extending and retracting the piston rod relative to the cylinder, the boom, arm, and bucket are rotated.

Electrification of construction machinery is desired from the viewpoint of structural simplification of the construction machinery. In Japanese Patent Application Publication 2003-82707 ("the '707 Publication"), for example, the hydraulic actuator is replaced with an electric cylinder with a linear motion mechanism having a ball-screw type speed changer provided therein. This ball-screw speed reducer can also be installed on construction machinery in the same way as the hydraulic cylinder. In other words, for example, the proximal end of the cylinder tube is rotatably attached to either the slewable upper structure or the boom, and the distal end of the piston is rotatably attached to the other.

In the construction machinery described in the '707 Publication, it is necessary to use both a linear motion mechanism and a rotating mechanism in order to support the cylinder and piston so that they can rotate in the boom and other parts. In other words, shafts, bearings, and other components that support shafts rotatably are provided as the rotating mechanisms, and cylinders and pistons are rotatably coupled to the boom and other parts via these rotating mechanisms. However, the use of both the linear motion mechanism and rotating mechanisms makes it difficult to simplify the structure of the construction machinery.

### SUMMARY

One aspect provides a construction machine. The construction machine includes: a main body including a support portion; a first drive unit having a first drive shaft; a second drive unit having a second drive shaft; a third drive unit having a third drive shaft; a boom having a proximal end portion, the proximal end portion being supported on the support portion via the first drive unit; an arm having a proximal end portion, the proximal end portion being supported on the boom via the second drive unit; and an attachment having a proximal end portion, the proximal end portion being supported on the arm via the third drive unit. One end of the drive shaft is fixed to a distal end portion of the support portion, the other end of the first drive shaft is fixed to the proximal end portion of the boom, one end of the second drive shaft is fixed to a distal end portion of the boom, the other end of the second drive shaft is fixed to the proximal end portion of the arm, one end of the third drive shaft is fixed to a distal end portion of the arm, and the other end of the third drive shaft is fixed to the proximal end portion of the attachment. In the width direction, the center of the boom is situated within the width of the arm.

Another aspect provides a working device of a construction machine. A construction machine includes: a main body including a support portion; a first drive unit having a first drive shaft; a second drive unit having a second drive shaft; a third drive unit having a third drive shaft; a boom having a proximal end portion, the proximal end portion being supported on the support portion via the first drive unit; an arm having a proximal end portion, the proximal end portion being supported on the boom via the second drive unit; and an attachment having a proximal end portion, the proximal end portion being supported on the arm via the third drive unit. One end of the drive shaft is fixed to a distal end portion of the support portion, the other end of the first drive shaft is fixed to the proximal end portion of the boom, one end the second drive shaft is fixed to the proximal end portion of the arm, one end of the third drive shaft is fixed to a distal end portion of the arm, and the other end of the third drive shaft is fixed to the proximal end portion of the attachment. In the width direction, the center of the boom is situated within the width of the arm.

### BRIEF DESCRIPTION OF THE DRAWINGS

Fig. 1 is a left side view of a construction machine according to one embodiment.
Fig. 2 is a left side view of the construction machine of Fig. 1.
Fig. 3 is a plan view of an operating unit of the construction machine of Fig. 1.
Fig. 4 is a plan view of a driving unit of the construction machine of Fig. 1.
Fig. 5 is a sectional view of a driving unit of a construction machine according to a modification example.
Fig. 6 is a plan view of an operating unit of the construction machine of Fig. 5.

### DESCRIPTION OF THE EMBODIMENTS

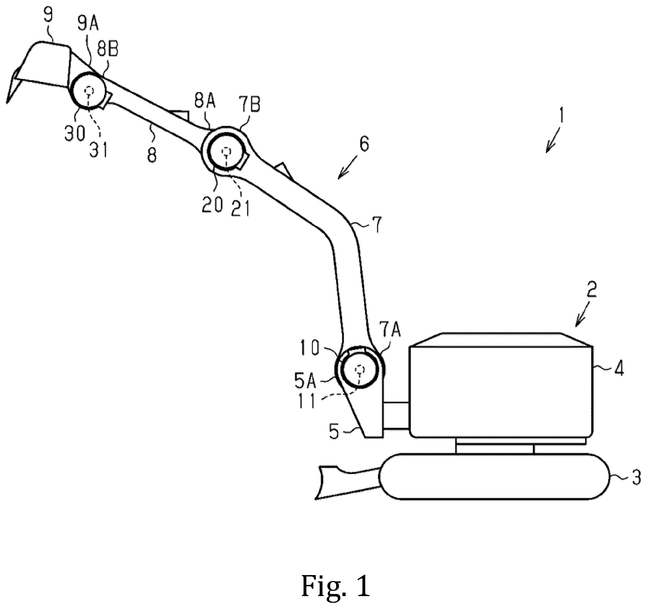

With reference to Figs. 1 to 4, the following describes an embodiment of a construction machine. In this embodiment, the construction machine is an excavator.

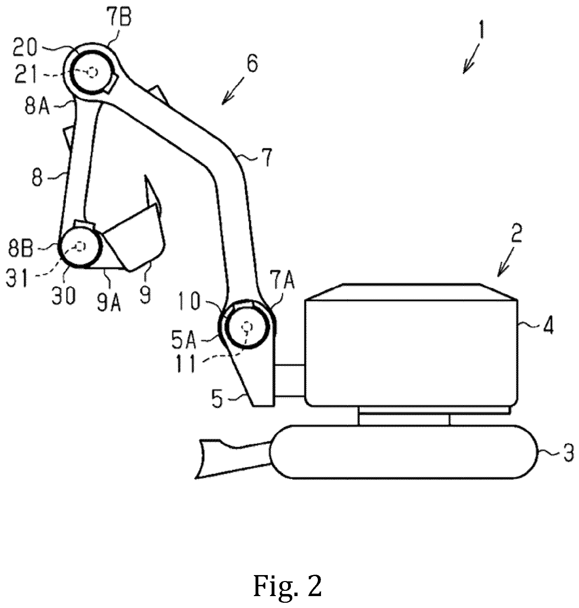

As shown in Figs. 1 and 2, a construction machine 1 includes a main body 2 and an operating unit 6. The main body 2 includes a self-propelled undercarriage 3 and a slewable upper structure 4 disposed on the undercarriage 3. The slewable upper structure 4 includes a supporting portion 5 that supports the operating unit 6. The slewable upper structure 4 includes a cab for an operator. The operating unit 6 corresponds to a working device of the construction machine.

The operating unit 6 includes a boom 7, an arm 8, and an attachment 9. A proximal end portion 7A of the boom 7 is supported on a distal end portion 5A of a support portion 5 of the main body 2 via a first drive unit 10. The boom 7 rotates relative to the support portion 5 by the drive of the first drive unit 10. A proximal end portion 8A of the arm 8 is supported on a distal end portion 7B of the boom 7 via a second drive unit 20. The arm 8 rotates relative to the boom 7 by the drive of the second drive unit 20. A proximal end 9A of the attachment 9 is supported on a distal end portion 8B of the arm 8 via a third drive unit 30. The attachment 9 rotates relative to the arm 8 by the drive of the third drive unit 30.

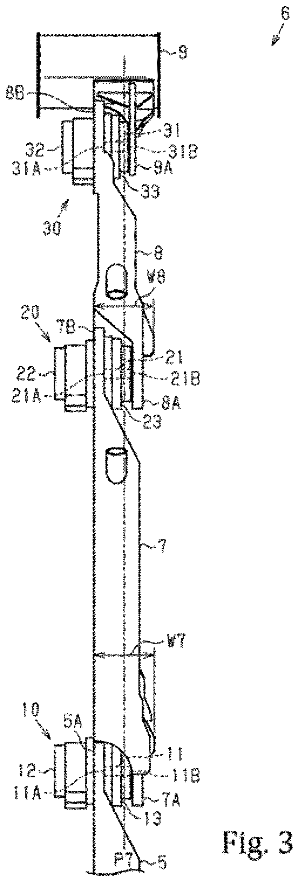

As shown in Fig. 3, one end 11A of a first drive shaft 11 of the first drive unit 10 is fixed to the distal end portion 5A of the support portion 5. The other end 11B of the first drive shaft 11 is fixed to the proximal end portion 7A of the boom 7. One end 21A of the second drive shaft 21 of the second drive unit 20 is fixed to the distal end portion 7B of the boom 7. The other end 21B of a second drive shaft 21 is fixed to the proximal end portion 8A of the arm 8. One end 31A of a third drive shaft 31 of a third drive unit 30 is fixed to the distal end portion 8B of the arm 8. The other end 31B of the third drive shaft 31 is fixed to the proximal end portion 9A of the attachment 9. Note that the first drive shaft 11, second drive shaft 21, and third drive shaft 31 are virtual representations of components that transmit the driving force. A centerline P7 of a width W7 of the boom 7 is located within a width W8 of the arm 8. In other words, in the width direction (left-right direction in Fig. 3), the center of the boom 7 is located within the width W8 of the arm 8. In other words, the boom 7 and the arm 8 are aligned almost in a straight line. Note that the width W7 is the maximum width of the boom 7. The width W8 is the maximum width of the arm 8.

The distal end portion 7B of the boom 7 is disposed on the left side of the centerline P7 of the boom 7, which is one side in the width direction in Fig. 3. In other words, the distal end portion 7B of the boom 7 is disposed on a first side in the width direction. The proximal end portion 8A of the arm 8 is disposed on the right side of the centerline P7 of the boom 7, which is other side in the width direction in Fig. 3. In other words, the proximal end portion 8A of the boom 8 is disposed on a second side in the width direction. The second drive shaft 21 is disposed between the distal end portion 7B of the boom 7 and the proximal end portion 8A of the arm 8. The second drive unit 20 includes a second drive mechanism 22 and a second reduction mechanism driven by the second drive mechanism 22. The second drive mechanism 22 is disposed on the outer side of the distal end portion 7B of the boom 7 in the width direction.

The distal end portion 5A of the support portion 5 is disposed on the left side of the centerline P7 of the boom 7 in the width direction in Fig. 3. The proximal end portion 7A of the boom 7 is disposed on the right side of the centerline P7 of the boom 7 in the width direction in Fig. 3. In other words, the distal end portion 5A of the support portion 5 is disposed on the first side in the width direction, and the proximal end portion 7A of the boom 7 is disposed on the second side in the width direction. The first drive shaft 11 is disposed between the distal end portion 5A of the support portion 5 and the proximal end portion 7A of the boom 7. It is desirable that the proximal end portion 7A and the distal end portion 7B of the boom 7 be provided on different sides from each other in the width direction (left-right direction in Fig. 3). The first drive unit 10 includes a first drive mechanism 12 and a first reduction mechanism 13 driven by the first drive mechanism 12. The first drive mechanism 12 is disposed on the outer side of the distal end portion 5A of the support portion 5 in the width direction.

The distal end portion 7B of the boom 7 is disposed on one side in the width direction with reference to the centerline P7 of the boom 7. The proximal end portion 9A of the attachment 9 is disposed on the right side of the centerline P7 of the boom 7 in the width direction, which is on the right side in Fig. 3. In other words, the distal end portion 8B of the arm 8 is disposed on the first side in the width direction, and the proximal end portion 9A of the attachment 9 is disposed on the second side in the width direction. The third drive shaft 31 is disposed between the distal end portion 8B of the arm 8 and the proximal end portion 9A of the attachment 9. It is desirable that the proximal end portion 8A and the distal end portion 8B of the arm 8 be provided on different sides from each other in the width direction (left-right direction in Fig. 3). The third drive unit 30 includes a third drive mechanism 32 and a third reduction mechanism 33 driven by the third drive mechanism 32. The third drive mechanism 32 is disposed on the outer side of the distal end portion 8B of the arm 8 in the width direction.

Next, a description is given of the second drive unit 20. The configuration of the first drive unit 10 and the third drive unit 30 are the same as that of the second drive unit 20, so their descriptions will be hereunder omitted.

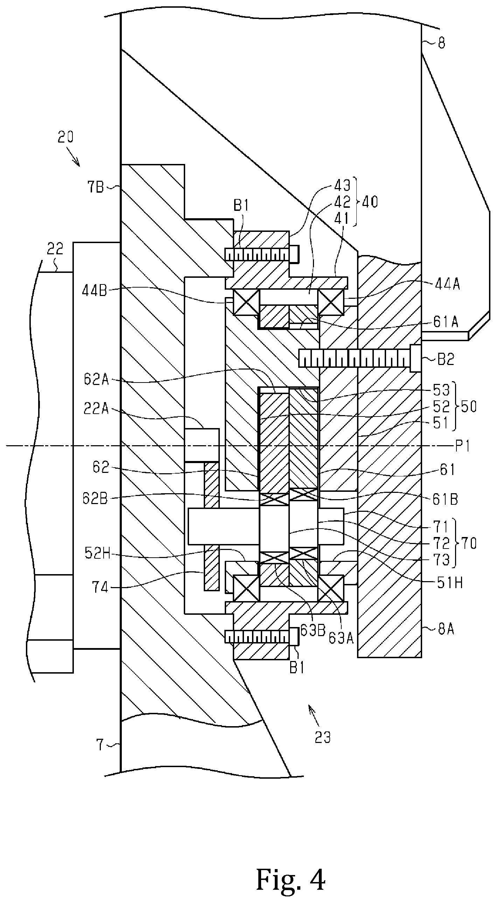

As shown in Fig. 4, the second drive unit 20 is held on the distal end portion 7B of the boom 7. In the embodiment, the second drive mechanism 22 of the second drive unit 20 is an electric motor. Fig. 3 is a schematic view showing the arrangement of the components of the second drive unit 20, in which the relationship between the sizes of, for example, the electric motor and other parts does not necessarily correspond to the actual ones.

An output shaft 22A of the second drive mechanism 22 penetrates the distal end portion 7B of the boom 7 and protrudes into the space between the distal end portion 7B of the boom 7 and the proximal end portion 8A of the arm 8. The output shaft 22A is rotatable in both forward and reverse directions relative to a rotational axis P1. The outer circumferential surface of the output shaft 22A is provided with a plurality of teeth (not shown). The second drive mechanism 22 serves as the power source for the second reduction mechanism 23.

The second reduction mechanism 23 is a speed reducer that reduces the rotation of the output shaft 22A of the second drive mechanism 22 at a predetermined gear ratio and outputs the reduced rotation. The second reduction mechanism 23 includes a case 40. The case 40 includes a case body 41, a plurality of teeth 42, and a flange 43. The rotational axis P1 of the output shaft 22A is situated at the center of the case 40. The case 40 is fixed to the distal end portion 7B of the boom 7 through which the output shaft 22A penetrates. The cases 40 correspond to a first member, third member, and fifth member.

The case body 41 is fixed to the distal end portion 7B of the boom 7. The case body 41 has a cylindrical shape. The plurality of teeth 42 protrude from the inner circumferential surface of the case body 41. The plurality of teeth 42 are arranged at equal intervals in the circumferential direction. The teeth 42 are situated near the center in the axial direction of the case body 41. The flange 43 protrudes from the outer circumferential surface of the case body 41. The flange 43 has an annular shape. The end surface of the flange 43 faces the distal end portion 7B of the boom 7. The flange 43 and the distal end portion 7B of the boom 7 are fixed by multiple bolts B1.

The second reduction mechanism 23 is equipped with a carrier 50. The carrier 50 is equipped with a first plate 51, a second plate 52, and a plurality of columnar portions 53. The first plate 51 is situated inside the case body 41.

The first plate 51 is situated on the arm 8 side in the axial direction of the case body 41. The first plate 51 has a disc-like shape. The diameter of the first plate 51 is smaller than the inner diameter of the case body 41. The central axis of the first plate 51 substantially coincides with the rotational axis P1. A bearing 44A is interposed between the outer circumferential surface of the first plate 51 and the inner circumferential surface of the case body 41. The bearing 44A is provided on the outer peripheral side of the second reduction mechanism 23. Additionally, the first plate member 51 is provided with multiple first through holes 51H that penetrate the first plate 51 in the axial direction. The number of first through holes 51H is, for example, three. The first through holes 51H are situated at locations offset from the rotational axis P1 in the radial direction. The multiple first through holes 51H are arranged at equal intervals in the circumferential direction.

The second plate 52 is located inside the case body 41. The second plate 52 is situated on the boom 7 side in the axial direction of the case body 41. The second plate 52 has a disc-like shape. The diameter of the second plate 52 is the same as the diameter of the first plate 51. The central axis of the second plate 52 substantially coincides with the rotational axis P1. A bearing 44B is interposed between the outer circumferential surface of the second plate 52 and the inner circumferential surface of the case body 41. The bearing 44B is provided on the outer peripheral side of the second reduction mechanism 23. Additionally, the second plate 52 is provided with multiple second through holes 52H that penetrate the second plate 52 in the axial direction. Each second through hole 52H forms a pair with the corresponding first through hole 51H. In other words, the number of the second through holes 52H is the same as the number of the first through holes 51H. The central axis of each second through hole 52H substantially coincides with the central axis of the paired first through hole 51H.

Multiple columnar portions 53 protrude from the second plate member 52 in the axial direction toward the arm 8. The columnar portions 53 are situated radially offset from the rotational axis P1. The columnar portions 53 are cylindrical in shape. Furthermore, the multiple columnar portions 53 are arranged at equal intervals in the circumferential direction. The columnar portions 53 are integrally molded with the second plate 52. The end surfaces of the columnar portions 53 are in contact with the first plate 51. That is, the columnar portions 53 extend from the second plate 52 to the first plate 51. Furthermore, the columnar portions 53 and the first plate 51 are fixed together using bolts B2.

The second reduction mechanism 23 is equipped with a first external gear 61. The first external gear 61 is disposed inside the case body 41. Thus, in the axial direction, the first external gear 61 is disposed between the first plate 51 and the second plate 52 of the carrier 50. Specifically, in the axial direction, the first external gear 61 is situated at the same position as the teeth 42 of the case 40. The first external gear 61 is generally shaped like a circular plate. The diameter of the first external gear 61 is smaller than the inner diameter of the case body 41. The central axis of the first external gear 61 is parallel with the rotational axis P1. A plurality of teeth are formed on the outer circumferential surface of the first external gear 61. The teeth are arranged at equal intervals in the circumferential direction. Fig. 4 does not show the teeth of the first external gear 61. Some of the plurality of teeth located in a part of the circumference are in mesh with the teeth 42 of the case 40. On the other hand, there is a gap between the other of the plurality of teeth located in the other part of the circumference and the teeth 42 of the case 40.

The first external gear 61 has a plurality of first through holes 61A that penetrate the first external gear 61 in the axial direction. The first through holes 61A are situated offset from the central axis of the first external gear 61 in the radial direction. The first through holes 61A are provided so as to correspond to the columnar portions 53. Each columnar portion 53 is received in the corresponding first through hole 61A. The diameter of the first through holes 61A is larger than the diameter of the columnar portions 53.

The first external gear 61 has a plurality of second through holes 61B that penetrate the first external gear 61 in the axial direction. Each second through hole 61B forms a pair with the corresponding first through hole 51H. In other words, the number of the second through holes 61B is the same as the number of the first through holes 51H. The second through holes 61B are situated offset from the central axis of the first external gear 61 in the radial direction. Each second through hole 61B communicates with the corresponding first through hole 51H.

The second reduction mechanism 23 is equipped with a second external gear 62. The second external gear 62 is located inside the case body 41. The second external gear 62 is adjacent to the first external gear 61 in the axial direction. Thus, in the axial direction, the second external gear 62 is situated between the first plate 51 and the second plate 52 of the carrier 50, as is the first external gear 61. Additionally, in the axial direction, the second external gear 62 is located at the same position as the teeth 42 of the case 40. The second external gear 62 is configured in the same manner as the first external gear 61. Specifically, the second external gear 62 includes a plurality of first through holes 62A that penetrate the second external gear 62 in the axial direction. The plurality of first through holes are provided so as to correspond the columnar portions 53. The second external gear 62 has a plurality of second through holes 62B that penetrate the second external gear 62 in the axial direction. Each second through hole 62B forms a pair with the corresponding second through hole 52H. Each second through hole 62B communicates with the corresponding second through hole 52H. The second through holes 62B are also in communication with the second through holes 61B in the first external gear 61. As a result, continuous shaft holes are formed of the first through holes 51H in the first plate 51, the corresponding second through holes 61B in the first external gear 61, the second through holes 62B in the second external gear 62, and the through holes 52H in the second plate 52. The number of the shaft holes corresponds to the number of the first through holes 51H in the first plate 51. These shaft holes are arranged at equal intervals in the circumferential direction.

The second reduction mechanism 23 includes a plurality of crankshafts 70. The crankshaft 70 is provided for each shaft hole. The crankshaft 70 includes a main shaft 71, a first eccentric portion 72, and a second eccentric portion 73.

The main shaft 71 is shaped like a circular column. The main shaft 71 extends in the axial direction. A large part of the main shaft 71 is received in the corresponding shaft hole. Specifically, in the axial direction, the end of the main shaft 71 closer to the arm 8 is located within the first through hole 51H in the first plate 51. A large part of the main shaft 71 closer to the boom 7 is located within the second through hole 52H in the second plate 52. A protruding portion, which is a part of the main shaft 71, protrudes from the second through hole 52H of the second plate member 52 toward the boom 7.

The first eccentric portion 72 is located in a middle portion of the main shaft 71 in the axial direction. Specifically, the first eccentric portion 72 is located in the second through hole 61B of the first external gear 61. The first eccentric portion 72 protrudes from an outer peripheral surface of the main shaft 71. In plan view in the axial direction, the first eccentric portion 72 has a circular outer shape. When seen in plan view in the axial direction, the center of the first eccentric portion 72 is not aligned with the center of the main shaft 71. A bearing 63A is interposed between an outer peripheral surface of the first eccentric portion 72 and the second through hole 61B of the first external gear 61. The bearings 44A and 44B are situated radially outward of the bearing 63A.

The second eccentric portion 73 is located in the middle portion of the main shaft 71 in the axial direction. Specifically, the second eccentric portion 73 is located in the second through hole 62B of the second external gear 62. The second eccentric portion 73 protrudes from the outer peripheral surface of the main shaft 71, like the first eccentric portion 72. In plan view in the axial direction, the second eccentric portion 73 has a circular outer shape. When seen in plan view in the axial direction, the center of the second eccentric portion 73 is not aligned with the center of the first eccentric portion 72 and the center of the main shaft 71. A bearing 63B is interposed between an outer peripheral surface of the second eccentric portion 73 and the second through hole 62B of the second external gear 62. The bearings 44A and 44B are situated radially outward of the bearing 63B.

The second reduction mechanism 23 includes two or more transmission gears 74. The transmission gears 74 correspond to the crankshafts 70 on a one-to-one basis. The transmission gears 74 are attached to the protruding portion of the main shaft 71. The transmission gear 74 has a generally annular shape. Each transmission gear 74 has a hole at the center, where the main shaft 71 is secured. Although not shown in the drawings, the transmission gear 74 has a plurality of teeth formed on the outer peripheral surface thereof.

The transmission gear 74 is in mesh with the teeth on the output shaft 22A of the second drive mechanism 22. The transmission gear 74 transmits the rotation of the output shaft 22A of the second drive mechanism 22 to the crankshaft 70. The crankshaft 70 transmits its own rotation caused by the rotation of the transmission gear 74 to the first external gear 61 and the second external gear 62 via the first eccentric portion 72 and the second eccentric portion 73 to drive the first external gear 61 and the second external gear 62. The first external gear 61 and the second external gear 62 rotate oscillatorily under the power from the first eccentric portion 72 and the second eccentric portion 73, respectively. In other words, the first external gear 61 rotates relative to the case body 41 while oscillating so as to vary the circumferential region meshing with the teeth 42 of the case 40. The second external gear 62 also rotates relative to the case body 41 in the same manner. The first external gear 61 and the second external gear 62 mesh with the carrier 50. The rotation of the first and second external gears 61 and 62 is transmitted to the carrier 50 via the columnar portions 53. The carrier 50 then rotates around the rotational axis P1. The carrier 50 is rotatable relative to the case 40. The rotation of the carrier 50 is decelerated relative to the rotation of the output shaft 22A. Thus, the arm 8 rotates relative to the boom 7. The carrier 50 corresponds to a second member, fourth member, sixth member, and output portion.

At least a part of the crankshaft 70 overlaps both the boom 7 and the arm 8 in the sectional view along the longitudinal direction of the boom 7 and the arm 8. In other words, the boom 7, the crankshaft 70, and the arm 8 are aligned in the longitudinal direction.

The following now describes how the above-described construction machine 1 works with reference to Figs. 1 and 3.

As shown in Figs. 1 and 2, the boom 7 rotates relative to the support portion 5 about the first drive shaft 11 driven by the first drive unit 10. That is, the first reduction mechanism 13 reduces the rotation of the output shaft of the first drive mechanism 12 fixed to the distal end portion 5A of the support portion 5 and outputs the reduced rotation to the proximal end portion 7A of the boom 7, thereby rotating the boom 7. The boom 7 rotates relative to the support portion 5 depending on the rotational amount of the output shaft of the first drive mechanism 12.

The arm 8 rotates relative to the boom 7 about the second drive shaft 21 driven by the second drive unit 20. That is, the second reduction mechanism 23 reduces the rotation of the output shaft 22A of the second drive mechanism 22 fixed to the distal end portion 7B of the boom 7 and outputs the reduced rotation to the proximal end portion 8A of the arm 8, thereby rotating the arm 8. The arm 8 rotates relative to the boom 7 depending on the amount of rotation of the output shaft 22A of the second drive mechanism 22.

The attachment 9 rotates relative to the arm 8 about the third drive shaft 31 driven by the third drive unit 30. That is, the third reduction mechanism 33 reduces the rotation of the output shaft of the third drive mechanism 32 fixed to the distal end portion 8B of the arm 8 and outputs the reduced rotation to the proximal end portion 9A of the attachment 9, thereby rotating the attachment 9. The attachment 9 rotates relative to the arm 8 depending on the amount of rotation of the output shaft of the third drive mechanism 32.

As shown in Fig. 3, the distal end portion 5A of the support portion 5 is disposed on one side (left side in Fig. 3) with reference to the first reduction mechanism 13, and the proximal end portion 7A of the boom 7 is disposed on the other side (right side in Fig. 3) with reference to the first reduction mechanism 13. Thus, the support portion 5, the first reduction mechanism 13 (crankshaft), and the boom 7 are aligned in the longitudinal direction and thereby the size can be reduced in the width direction.

The distal end portion 7B of the boom 7 is disposed on one side (left side in Fig. 3) with reference to the second reduction mechanism 23, and the proximal end portion 8A of the arm 8 is disposed on the other side (right side in Fig. 3) with reference to the second reduction mechanism 23. Thus, the boom 7, the second reduction mechanism 23 (crankshaft 70), and the arm 8 are aligned in the longitudinal direction and thereby the size can be reduced in the width direction.

The distal end portion 8B of the arm 8 is disposed on one side (left side in Fig. 3) relative to the third reduction mechanism 33, and the proximal end portion 9A of the attachment 9 is disposed on the other side (right side in Fig. 3) with reference to the third reduction mechanism 33. Thus, the arm 8, the third reduction mechanism 33 (crankshaft), and the proximal end portion 9A of the attachment 9 are aligned in the longitudinal direction and thereby the size can be reduced in the width direction.

Advantageous effects of the above embodiment will be now described.
(1) Since the support portion 5 and the boom 7 are supported via the first drive unit 10, the structure in which the support portion 5 supports the boom 7 can be simplified. Since the boom 7 and the arm 8 are supported via the second drive unit 20, the structure in which the boom 7 supports the arm 8 can be simplified. Since the arm 8 and the attachment 9 are supported via the third drive unit 30, the structure in which the arm 8 supports the attachment 9 can be simplified. Furthermore, since the centerline P7 of the width W7 of the boom 7 is located within the width W8 of the arm 8, the boom 7 and the arm 8 can be arranged in a straight line. Therefore, the size of the boom 7 and the arm 8 can be reduced in the width direction.
(2) The second drive shaft 21 is disposed without shifting the boom 7 and the arm 8 in the width direction. The distal end portion 7B of the boom 7 is disposed on the left side of the centerline P7 of the boom 7, which is one side in the width direction in Fig. 3, and the proximal end portion 8A of the arm 8 is disposed on the right side of the centerline P7 of the boom 7, which is on the right side in the width direction in Fig. 3. The second drive shaft 21 is disposed between the distal end portion 7B of the boom 7 and the proximal end portion 8A of the arm 8. Thus, the width-direction length including the boom 7 and the arm 8 can be reduced.
(3) The first drive shaft 11 is disposed without shifting the support portion 5 and the boom 7 in the width direction. The distal end portion 5A of the support portion 7 is disposed on the left side of the centerline P7 of the boom 7, which is one side in the width direction in Fig. 3, and the proximal end portion 7A of the boom 7 is disposed on the right side of the centerline P7 of the boom 7, which is on the right side in the width direction in Fig. 3. The first drive shaft 11 is disposed between the distal end portion 5A of the support portion 5 and the proximal end portion 7A of the boom 7. Thus, the width-direction length including the support portion 5 and the boom 7 can be reduced.
(4) The third drive shaft 31 is provided without shifting the arm 8 and the attachment 9 in the width direction. The distal end portion 8B of the arm 8 is disposed on the left side of the centerline P7 of the boom 7, which is one side in the width direction in Fig. 3, and the proximal end portion 9A of the attachment 9 is disposed on the right side of the centerline P7 of the boom 7, which is on the right side in the width direction in Fig. 3. The third drive shaft 31 is disposed between the distal end portion 8B of the arm 8 and the proximal end portion 9A of the attachment 9. Thus, the width-direction length including the arm 8 and the proximal end portion 9A of the attachment 9 can be reduced.
(5) The first drive unit 10 can decelerate the rotation of the first drive mechanism 12 by means of the first reduction mechanism 13. The second drive unit 20 can decelerate the rotation of the second drive mechanism 22 by means of the second reduction mechanism 23. The third drive unit 30 can decelerate the rotation of the third drive mechanism 32 by means of the third reduction mechanism 33.
(6) Since the first drive mechanism 12 is disposed on the outer side of the distal end portion 5A of the support portion 5 in the width direction, it is possible to determine the width of the distal end portion 5A of the support portion 5 and the width of the proximal end portion 7A of the boom 7 regardless of the size of the first drive mechanism 12. Since the second drive mechanism 22 is disposed on the outer side of the distal end portion 7B of the boom 7 in the width direction, it is possible to determine the width of the distal end portion 7B of the boom 7 and the width of the proximal end portion 8A of the arm 8 regardless of the size of the second drive mechanism 22. Since the third drive mechanism 32 is disposed on the outer side of the distal end portion 8B of the arm 8 in the width direction, it is possible to determine the width of the distal end portion 8B of the arm 8 and the width of the proximal end portion 9A of the attachment 9 regardless of the size of the third drive mechanism 32.

The foregoing embodiment can be modified as described below. The above embodiment and the following modification examples can be implemented in combination to the extent where they are technically consistent to each other.

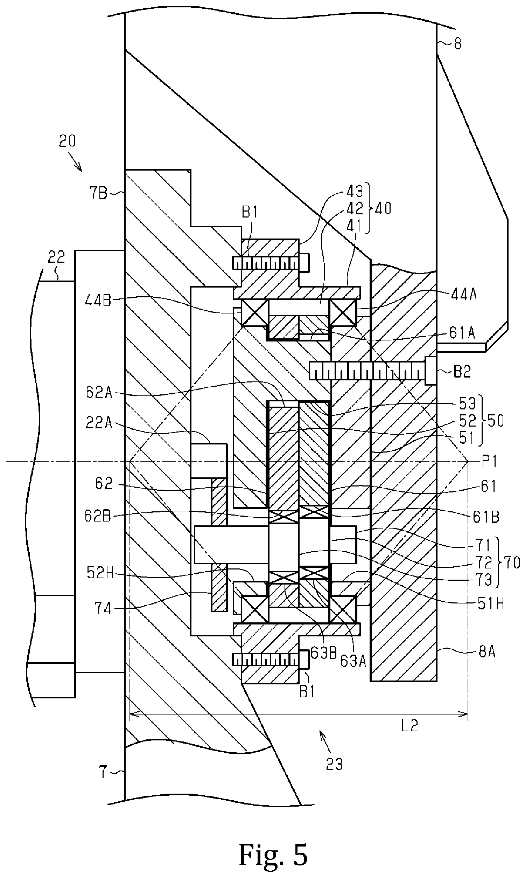

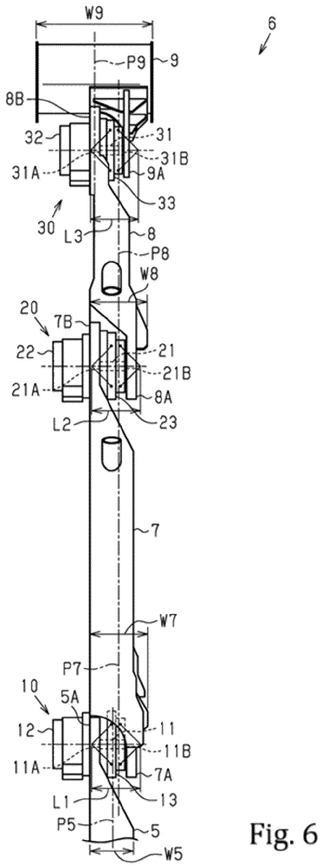

In the above embodiment, an application point distance between the bearings and the centerlines of the components may be specified. Specifically, as shown in Fig. 5, the application point distance L2 between the pair of bearings 44A and 44B disposed in the outer peripheral portions of the second reduction mechanism 23 is set. The application point distance is determined depending on the bearings provided. Similarly, as shown in Fig. 6, the application point distance L1 between a pair of bearings (shown by • in Fig. 6) disposed in the outer peripheral portion of the first reduction mechanism 13 is set. The application point distance L3 between a pair of bearings (shown by •) provided in the outer peripheral portion of the third reduction mechanism 33 is set. The centerline P7 of the width W7 of the boom 7 and the centerline P8 of the width W8 of the arm 8 are situated within the application point distance L2, i.e., these centerlines are located between the application point distance of the bearings 44A and 44B in the width direction. This allows the width W7 of the boom 7 and the width W8 of the arm 8 to be reduced while ensuring a safety factor against external loads on the second drive unit 20. Furthermore, the centerline P5 of the width W5 of the support portion 5 and the centerline P7 of the width W7 of the boom 7 are located within the application point distance L1 of the pair of bearings disposed in the outer peripheral portion of the first reduction mechanism 13. This allows the width W5 of the support portion 5 and the width W7 of the boom 7 to be reduced while ensuring a safety factor against external loads on the first drive unit 10. Furthermore, the centerline P8 of the width W8 of the arm 8 and the centerline P9 of the width W9 of the attachment 9 are located within the application point distance L3 between the pair of bearings disposed in the outer peripheral portion of the third reduction mechanism 33. This allows the width W8 of the arm 8 and the width W9 of the attachment 9 to be reduced while ensuring a safety factor against external loads on the third drive unit 30. Furthermore, in at least one of the first reduction mechanism 13, the second reduction mechanism 23, or the third reduction mechanism 33, the centerline(s) of the component(s) may be located within the application point distance between the bearings.

In the above embodiment, the first drive mechanism 12 is disposed on the outer side of the distal end portion 5A of the support portion 5 in the width direction. Alternatively, the first drive mechanism 12 may be disposed between the distal end portion 5A of the support portion 5 and the proximal end portion 7A of the boom 7.

In the above embodiment, the second drive mechanism 22 is disposed on the outer side of the distal end portion 7B of the boom 7 in the width direction. Alternatively, the second drive mechanism 22 may be disposed between the distal end portion 7B of the boom 7 and the proximal end portion 8A of the arm 8.

In the above embodiment, the third drive mechanism 32 is disposed on the outer side of the distal end portion 8B of the arm 8 in the width direction. Alternatively, the third drive mechanism 32 may be disposed between the distal end portion 8B of the arm 8 and the proximal end portion 9A of the attachment 9.

In the above embodiment, the configurations of the first reduction mechanism 13, the second reduction mechanism 23, and the third reduction mechanism 33 are not limited to those of the above embodiment. The reduction mechanism can be configured in any way provided that it is capable of reducing the rotation of the drive mechanism.

In the above embodiment, the first drive unit 10 is equipped with the first drive mechanism 12 and the first reduction mechanism 13. However, if the first drive mechanism 12 alone is capable of transmitting the drive force, the first reduction mechanism 13 may be omitted.

In the above embodiment, the second drive unit 20 is equipped with the second drive mechanism 22 and the second reduction mechanism 23. However, if the second drive mechanism 22 alone is capable of transmitting the drive force, the second reduction mechanism 23 may be omitted.

In the above embodiment, the third drive unit 30 is equipped with the third drive mechanism 32 and the third reduction mechanism 33. However, if the third drive mechanism 32 alone is capable of transmitting the drive force, the third reduction mechanism 33 may be omitted.

In the above embodiment, the distal end portion 8B of the arm 8 is disposed on one side of the centerline P7 of the boom 7 in the width direction, and the proximal end portion 9A of the attachment 9 is disposed on the other side of the centerline P7 of the boom 7 in the width direction. Alternatively, the distal end portion 8B of the arm 8 may not be disposed on one side of the centerline P7 of the boom 7 in the width direction, and the proximal end portion 9A of the attachment 9 may not be disposed on the other side of the centerline P7 of the boom 7 in the width direction.

In the above embodiment, the distal end portion 5A of the support portion 5 is disposed on one side of the centerline P7 of the boom 7 in the width direction, and the proximal end portion 7A of the boom 7 is disposed on the other side of the centerline P7 of the boom 7 in the width direction. Alternatively, the distal end portion 5A of the support portion 5 may not be disposed on one side of the centerline P7 of the boom 7 in the width direction, and the proximal end portion 7A of the boom 7 may not be disposed on the other side of the centerline P7 of the boom 7 in the width direction.

The foregoing embodiment describes a plurality of physically separate constituent parts. They may be combined into a single part, and any one of them may be divided into a plurality of physically separate constituent parts. Irrespective of whether or not the constituent parts are integrated, they are acceptable as long as they are configured to solve the problems.

## Claims

1. A construction machine (1) comprising:
a drive unit (20);
a boom (7); and
an arm (8) having a proximal end portion (8A), the proximal end portion being supported on the boom via the drive unit.

2. The construction machine (1) of claim 1, wherein the drive unit (20) is a second drive unit having a second drive shaft (21), the construction machine further comprising:
a main body (2) including a support portion (5);
a first drive unit (10) having a first drive shaft (11);
a third drive unit (30) having a third drive shaft (31); and
an attachment (9) having a proximal end portion (9A), the proximal end portion being supported on the arm via the third drive unit,
wherein the boom (7) has a proximal end portion (7A), the proximal end portion being supported on the support portion via the first drive unit,
wherein one end (11A) of the first drive shaft is fixed to a distal end portion (5A) of the support portion,
wherein the other end (11B) of the first drive shaft is fixed to the proximal end portion of the boom,
wherein one end (21A) of the second drive shaft is fixed to a distal end portion (7B) of the boom,
wherein the other end (21B) of the second drive shaft is fixed to the proximal end portion of the arm,
wherein one end (31A) of the third drive shaft is fixed to a distal end portion (8B) of the arm,
wherein the other end (31B) of the third drive shaft is fixed to the proximal end portion of the attachment, and
wherein, in a width direction, a center of the boom is situated within a width of the arm.

3. The construction machine (1) of claim 2, wherein the distal end portion (7B) of the boom (7) is disposed on a first side in the width direction,
wherein the proximal end portion (8A) of the arm (8) is disposed on a second side in the width direction, and
wherein the second drive shaft (21) is disposed between the distal end portion of the boom and the proximal end portion of the arm.

4. The construction machine (1) of claim 2, wherein the distal end portion (5A) of the support portion (5) is disposed on a first side in the width direction,
wherein the proximal end portion (7A) of the boom (7) is disposed on a second side in the width direction, and
wherein the first drive shaft (11) is disposed between the distal end portion of the support portion and the proximal end portion of the boom.

5. The construction machine (1) of claim 2, wherein the distal end portion (8B) of the arm (8) is disposed on a first side in the width direction,
wherein the proximal end portion (9A) of the attachment (9) is disposed on a second side in the width direction, and
wherein the third drive shaft (31) is disposed between the distal end portion of the arm and the proximal end portion of the attachment.

6. The construction machine (1) of claim 2, wherein the first drive unit (10) includes a first drive mechanism (12) and a first reduction mechanism (13) driven by the first drive mechanism,
wherein the first reduction mechanism includes a first member (40) on which one end of the first drive shaft (11) is disposed, and a second member (50) on which the other end of the first drive shaft is disposed, rotation of the second member being reduced relative to the first member of the first reduction mechanism,
wherein the second drive unit (20) includes a second drive mechanism (22) and a second reduction mechanism (23) driven by the second drive mechanism,
wherein the second reduction mechanism includes a third member (40) on which one end of the second drive shaft (21) is disposed, and a fourth member (50) on which the other end of the second drive shaft is disposed, rotation of the fourth member being reduced relative to the third member of the second reduction mechanism,
wherein the third drive unit (30) includes a third drive mechanism (32) and a third reduction mechanism (33) driven by the third drive mechanism, and
wherein the third reduction mechanism includes a fifth member (40) on which one end of the third drive shaft (31) is disposed, and a sixth member (50) on which the other end of the third drive shaft is disposed, rotation of the sixth member being reduced relative to the fifth member of the third reduction mechanism.

7. The construction machine (1) of claim 6, wherein the first drive mechanism (12) is disposed on an outer side of the distal end portion (5A) of the support portion (5) in the width direction,
wherein the second drive mechanism (22) is disposed on an outer side of the distal end portion (7B) of the boom (7) in the width direction, and
wherein the third drive mechanism (32) is disposed on an outer side of the distal end portion (8B) of the arm (8) in the width direction,

8. The construction machine (1) of any one of claims 2-5, wherein the second drive unit (20) includes a second drive mechanism (22) and a second reduction mechanism (23) driven by the second drive mechanism, and
wherein a centerline (P7) of a width of the boom (7) and a centerline (P8) of a width of the arm (8) are situated within an application point distance (L2) between a pair of bearings (44A, 44B) disposed in an outer peripheral portion of the second reduction mechanism.

9. The construction machine (1) of any one of claims 2-5, wherein the first drive unit (10) includes a first drive mechanism (12) and a first reduction mechanism (13) driven by the first drive mechanism,
a centerline (P5) of a width of the support portion (5) and a centerline (P7) of a width of the boom (7) are situated within an application point distance (L1) between a pair of bearings disposed in an outer peripheral portion of the first reduction mechanism.

10. The construction machine (1) of any one of claims 2-5, wherein the third drive unit (30) includes a third drive mechanism (32) and a third reduction mechanism (33) driven by the third drive mechanism, and
wherein a centerline (P8) of a width of the arm (8) and a centerline (P9) of a width of the attachment (9) are situated within an application point distance (L3) between a pair of bearings disposed in an outer peripheral portion of the third reduction mechanism.

11. The construction machine (1) of claim 1, wherein the drive unit includes a drive mechanism (22) and a reduction mechanism (23) driven by the drive mechanism, and
wherein the reduction mechanism includes a crankshaft (70) to which output of the drive mechanism is transmitted, a gear (61, 62) driven by the crankshaft, and an output portion (50) meshed with the gear, and
wherein at least a part of the crankshaft overlaps both the boom and the arm in a sectional view along a longitudinal direction of the boom and the arm.

12. A working device of a construction machine (1), comprising:
a main body (2) including a support portion (5);
a first drive unit (10) having a first drive shaft (11);
a second drive unit (20) having a second drive shaft (21);
a third drive unit (30) having a third drive shaft (31);
a boom (7) having a proximal end portion (7A), the proximal end portion being supported on the support portion via the first drive unit;
an arm (8) having a proximal end portion (8A), the proximal end portion being supported on the boom via the second drive unit; and
an attachment (9) having a proximal end portion (9A), the proximal end portion being supported on the arm via the third drive unit,
wherein one end (11A) of the first drive shaft is fixed to a distal end portion (5A) of the support portion,
wherein the other end (11B) of the first drive shaft is fixed to the proximal end portion of the boom,
wherein one end (21A) of the second drive shaft is fixed to a distal end portion (7B) of the boom,
wherein the other end (21B) of the second drive shaft is fixed to the proximal end portion of the arm,
wherein one end (31A) of the third drive shaft is fixed to a distal end portion (8B) of the arm,
wherein the other end (31B) of the third drive shaft is fixed to the proximal end portion of the attachment, and
wherein, in a width direction, a center of the boom is situated within a width of the arm.
